# EUROPÄISCHE PATENTSCHRIFT

(11) **EP 0 597 408 B1**
(45) Veröffentlichungstag und Bekanntmachung des Hinweises auf die Patenterteilung: **24.09.1997**
(21) Anmeldenummer: 93118030.1
(22) Anmeldetag: 06.11.1993
(51) Int. Cl.: B60H 1/26, B60H 1/32

(54) **Kompaktklimagerät und/oder Kompakt-Lüftungs/Luftheiz-Gerät für ein Fahrzeug**
Compact air-conditioning unit and/or compact ventilating/air heating unit for a vehicle
Appareil compact de climatisation et/ou appareil compact d'aération/de chauffage par air pour un véhicule

(30) Priorität: 13.11.1992 DE 4238357
(43) Veröffentlichungstag der Anmeldung: 18.05.1994
(73) Patentinhaber: ABB PATENT GmbH, 68309 Mannheim (DE)
(72) Erfinder: Nestler, Dietrich, D-68163 Mannheim (DE)
(74) Vertreter: Rupprecht, Klaus, Dipl.-Ing.

(56) Entgegenhaltungen:
- US-A- 4 732 011
- US-A- 4 905 478
- US-A- 4 926 655

## Beschreibung

Die Erfindung bezieht sich auf ein Kompaktklimagerät oder Kompakt-Lüftungs/Luftheiz-Gerät für ein Fahrzeug gemäß dem Oberbegriff der nebengeordneten Ansprüche 1 oder 2.

Aus der ABB HENSCHEL-Druckschrift DEWAG 9202 D ist ein Kompaktklimagerät für ein Fahrzeug bekannt. Soll dieses Kompaktklimagerät für unterschiedliche Fahrzeugtypen verwendet werden, so ist eine Anpassung an das spezielle Fahrzeug notwendig. Beispielsweise muß die Breite des Kompaktklimagerätes in übereinstimmung mit der Breite des Fahrzeuges gebracht werden, der Luftanschlußstutzen zur Einleitung der aufbereiteten Luft in den Fahrzeuginnenraum muß an den Stutzen des Fahrzeug-Luftkanals und an dessen genaue Lage angepaßt werden und zur Montage auf dem Fahrzeugdach muß das Kompaktklimagerät mit Aufhängeeinrichtungen versehen werden, die auf den speziellen Fahrzeugtyp abgestimmt sind. Diese Bedingungen verhindern eine preiswerte, rationelle Fertigung des Kompaktklimagerätes in großer Stückzahl und verteuern die Ersatzteilbevorratung.

Der Erfindung liegt die Aufgabe zugrunde, ein Kompaktklimagerät und/oder Kompakt-Lüftungs/Luftheiz-Gerät für ein Fahrzeug anzugeben, das für unterschiedliche Fahrzeugtypen mit unterschiedlichen Abmessungen und Formen verwendet und trotzdem rationell und preiswert hergestellt werden kann.

Diese Aufgabe wird in Verbindung mit den Merkmalen des Oberbegriffes erfindungsgemäß durch die im Kennzeichen der Ansprüche 1 oder 2 angegebenen Merkmale gelöst.

Die mit der Erfindung erzielbaren Vorteile bestehen insbesondere darin, daß die drei Vorbauten des Kompaktklimagerätes oder Kompakt-Lüftungs/Luftheiz-Gerätes preiswert und rasch an unterschiedliche Fahrzeugtypen, Fahrzeugabmessungen, Formgebungen, Luftkanal-Stutzen und Montagepunkte angepaßt werden können, während das Kernaggregat, das die wesentlichen Bauteile des Kompaktklimagerätes oder Kompakt-Lüftungs/Luftheiz-Gerätes beinhaltet, jeweils unverändert bleibt. Da das Kernaggregat in keiner Weise an das Fahrzeug angepaßt werden muß, kann es in großer Stückzahl und universell verwendbar für unterschiedliche Fahrzeugtypen hergestellt werden. Hierdurch werden die Produktionskosten gesenkt und die Ersatzteilbevorratung erleichtert. Ferner werden kostspielige Konstruktionsänderungen am Fahrzeug vermieden.

Die Vorbauten sind in vielerlei Hinsicht variabel produzierbar, beispielsweise in Größe, Design und Formgebung, Aufhängung und Luftkanal-Anschluß zum Fahrzeug. Vorteilhaft müssen die zur Herstellung benötigten Materialien (z. B. Aluminium, Stahlblech) beim Kernaggregat und den Vorbauten nicht gleich sein, sondern können entsprechend speziellen Anforderungen, z. B. Festigkeit, Gewicht, Korrosionssicherheit usw. gewählt werden.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert.

Es zeigen:
- Figur 1: die Hauptkomponenten des Kompaktklimagerätes vor dem Zusammenbau,
- Figur 2: eine Sicht auf das Kompaktklimagerät bei entfernten Deckeln,
- Figur 3: einen alternativen Vorbau für die Stirnfläche des Kompaktklimagerätes,
- Figur 4: eine alternative Möglichkeit der Aufhängung des Kompaktklimagerätes,
- Figuren 5, 6: Stirnansichten des auf einem Fahrzeug montierten Kompaktklimagerätes,
- Figur 7: eine Seitenansicht des auf einem Fahrzeug montierten Kompaktklimagerätes,
- Figur 8: eine Stirnansicht eines alternativen Kompaktklimagerätes,
- Figur 9: eine Sicht auf das Kompakt-Lüftungs/Luftheiz-Gerät bei entfernten Deckeln.

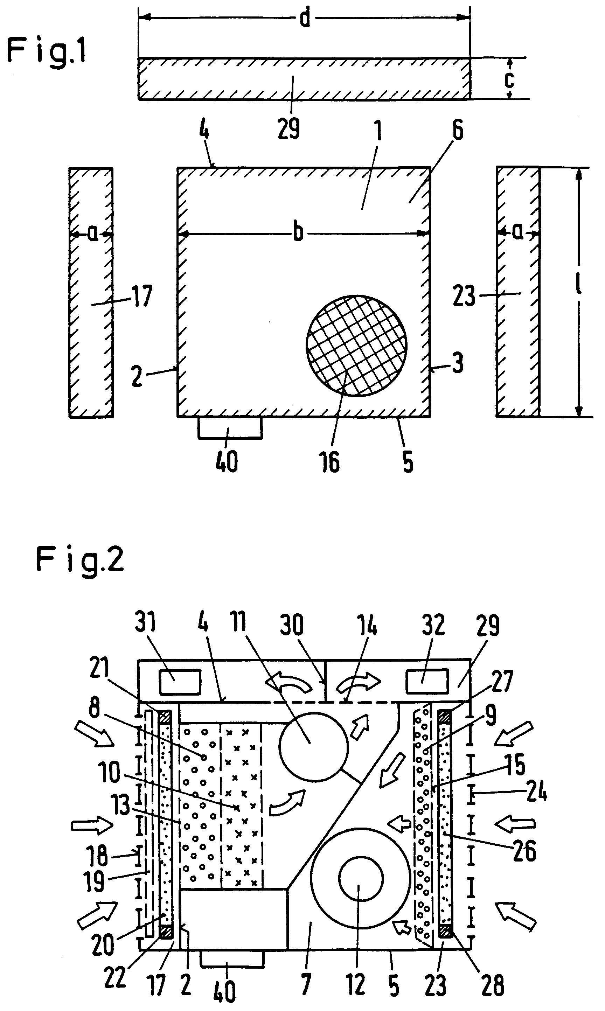

In Figur 1 sind die Hauptkomponenten des Kompaktklimagerätes vor dem Zusammenbau dargestellt. Das Kompaktklimagerät besteht aus einem Kernaggregat 1 und drei mit dem Kernaggregat verbindbaren Vorbauten 17, 23, 29. Während das Kernaggregat 1 selbsttragend aufgebaut ist und sämtliche Bauelemente eines Klimagerätes wie Verdichter, Verflüssiger, Expansionsventil, Verdampfer, Klimalüfter, Verflüssigerlüfter usw. aufweist, dient der Vorbau 17 speziell für den Lufteinlaß der aufzubereitenden Luft, der Vorbau 23 speziell für den Lufteinlaß der Kühlluft des Verflüssigers und der Vorbau 29 speziell für die Einleitung der aufbereiteten Luft in das Fahrzeug. Die Montage der Vorbauten 17, 23, 29 an das Kernaggregat 1 erfolgt vorzugweise über Schraubverbindungen.

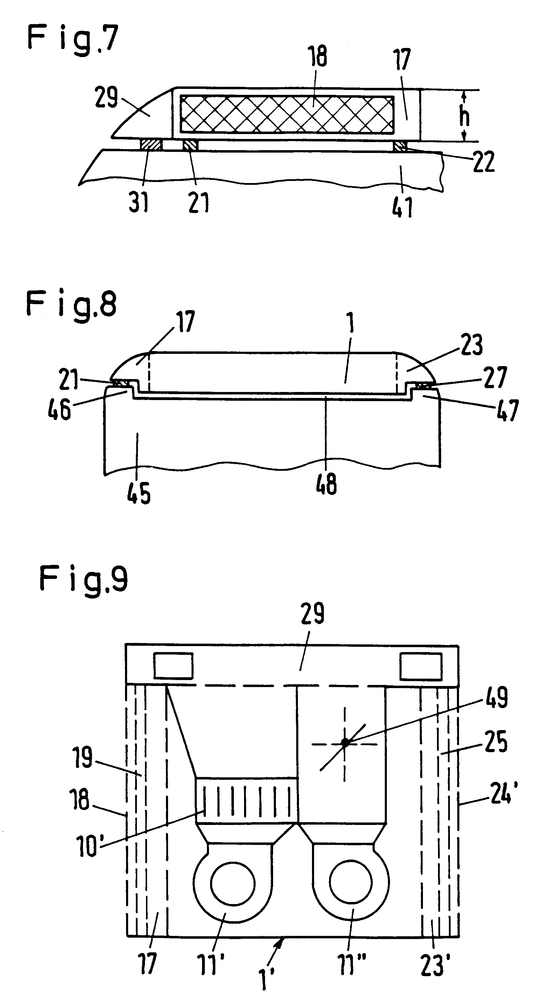

Während die äußere Form und die Abmessungen des Kernaggregats 1 (sh. Länge 1, Breite b in Figur 1 und Höhe h in Figur 7) für unterschiedliche Fahrzeugtypen und Fahrzeugabmessungen stets gleich sind, sind die äußeren Formen und die Abmessungen der Vorbauten 17, 23, 29 (siehe Breite a der Vorbauten 17, 23, Breite c und Länge d des Vorbaus 29) für verschiedene Fahrzeugtypen und Fahrzeugabmessungen unterschiedlich und an den speziellen Fahrzeugtyp und die Fahrzeugabmessungen angepaßt. Die Anpassung des Kompaktklimagerätes an verschiedene Fahrzeugtypen unterschiedlicher Abmessungen erfolgt demnach ausschließlich durch entsprechende Ausbildung der Vorbauten 17, 23, 29 bei stets gleichem Kernaggregat. Wesentlich ist, daß die Vorbauten 17, 23, 29 trotz fahrzeugspezifischer Abmessungen und Formen stets in einfacher Art und Weise mit dem Kernaggregat verbindbar sind, wobei insbesondere der Lage der Luftein- und auslässe (siehe Öffnungen 13, 14, 15 gemäß Figur 2) des Kernaggregats 1 zu berücksichtigen sind.

Wie in Figur 1 ersichtlich ist, werden der Vorbau 17 bzw. der Vorbau 23 an die erste Seitenfläche 2 bzw. an die zweite Seitenfläche 3 des Kernaggregats 1 montiert, wobei diese Seitenflächen 2, 3 parallel zur Längsachse des Fahrzeuges verlaufen. Der Vorbau 29 wird hierzu quer, d. h. senkrecht zur Längsachse des Fahrzeuges an die erste Stirnfläche 4 des Kernaggregates 1 angebaut. An der zweiten Stirnseite 5 kann sich ein Elektroanschlußkasten 40 zur Energieversorgung und -regelung/steuerung des Kompaktklimagerätes befinden. Der Deckel 6 des Kompaktklimagerätes wird von einer Öffnung 16 für den Luftaustritt der durch den Verfüssiger erhitzten Luft durchbrochen.

In Figur 2 ist eine Sicht auf das Kompaktklimagerät bei entfernten Deckeln dargestellt. Es ist ein Verflüssigerlüfter 12 zu erkennen, der Luft über ein Lufteinlaßgitter 24 des Vorbaus 23 ansaugt (siehe Pfeile). Diese Luft durchströmt die Öffnung 15 in der Seitenfläche 3 des Kernaggregats 1, wird im Verflüssiger 9 erwärmt und über den Verflüssigerlüfter 12 in die Außenatmosphäre abgeblasen.

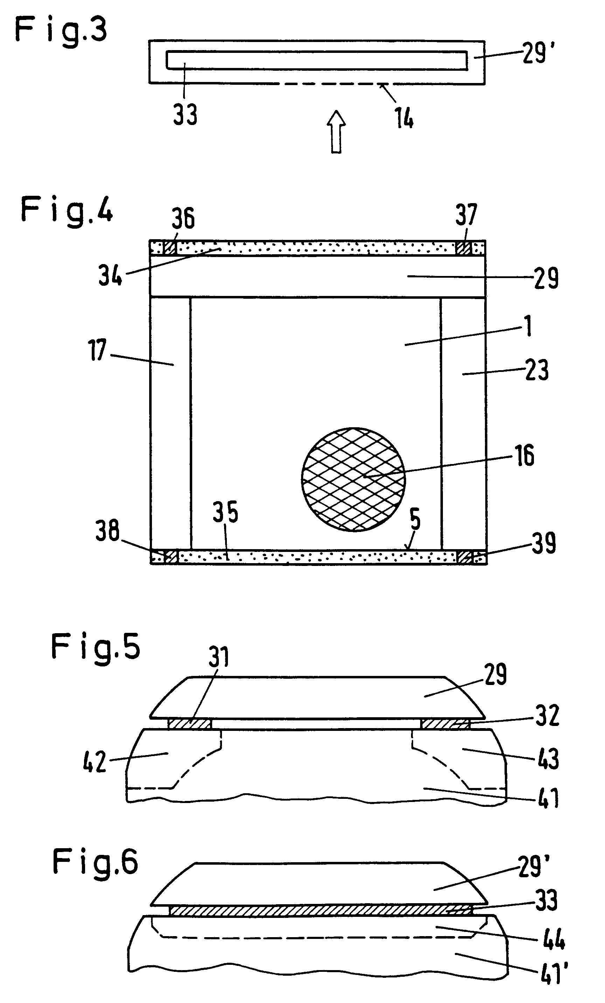

Ferner ist ein Klimalüfter 11 zu erkennen, der Luft über ein Lufteinlaßgitter 18 und ein Luftfilter 19 des Vorbaus 17 ansaugt (sh. Pfeile). Diese Luft durchströmt die Öffnung 13 in der Seitenfläche 2 des Kernaggregats 1, wird bedarfsweise im Verdampfer 8 abgekühlt oder im Heizaggregat 10 erwärmt und über den Klimalüfter 11 und die Öffnung 14 in der Stirnfläche 4 in den Querkanal des Vorbaus 29 geblasen. Dieser Querkanal kann mittels einer Trennwand 30 hälftig geteilt sein. In der Nähe der äußeren Enden des Querkanals befindet sich je ein Luftanschlußstutzen 31, 32, durch den die aufbereitete Luft vom Querkanal in Fahrzeug-Luftkanäle (sh. Ziffern 42, 43 gemäß Figur 5) geleitet wird.

In Figur 2 ist ferner eine erste Möglichkeit der Befestigung des Kompaktklimagerätes am Fahrzeug gezeigt. Hierzu sind ein Rahmen 20 im Vorbau 17 und ein Rahmen 26 im Vorbau 23 angebracht, wobei an den Enden des Rahmens 20 Aufhängeeinrichtungen 21, 22 und an den Enden des Rahmens 26 Aufhängeeinrichtungen 27, 28 vorgesehen sind. Die genaue Lage der Rahmen und Aufhängevorrichtungen ist von der Lage der Aufhängepunkte am Dach des Fahrzeuges abhängig und somit variabel. Durch die Maßnahme, die Aufhängung des Kompaktklimagerätes nicht am Kernaggregat selbst, sondern an den fahrzeugspezifisch formbaren Vorbauten 17, 23, 29 vorzusehen, ist eine leichte Anpassung der Aufhängung des Kompaktklimagerätes an unterschiedliche Fahrzeugtypen möglich, ohne dabei Änderungen am Kernaggregat selbst vornehmen zu müssen.

In Figur 2 sind ferner die zweite Stirnfläche 5 des Kernaggregats 1 mit Elektroanschlußkasten 40 sowie die Unterseite 7 zu erkennen. Weitere Bauteile des Kernaggregats, wie Verdichter, Kühlmittelsammler, Kältemittelleitungen usw. sind aus Gründen der Übersichtlichkeit nicht dargestellt.

In Figur 3 ist ein alternativer Vorbau für die Stirnfläche des Kompaktklimagerätes dargestellt. Bei diesem Vorbau 29' zieht sich ein Luftanschlußstutzen 33 für ein Fahrzeug über die ganze Breite des Querkanals, so daß die aufbereitete Luft über die Öffnung 14 und den Querkanal direkt in den Luftanschlußstutzen 33 geleitet werden kann, ohne daß dabei eine Trennwand 30 notwendig ist.

In Figur 4 ist eine alternative Möglichkeit der Aufhängung des Kompaktklimagerätes dargestellt. Bei dem gezeigten Kompaktklimagerät werden die Rahmen 20, 26 mit den Aufhängeeinrichtungen 21, 22, 27, 28 gemäß Figur 2 durch Rahmen 34 und 35 ersetzt, die an ihren Enden Aufhängeeinrichtungen 36, 37 und 38, 39 aufweisen. Der Rahmen 34 ist am Vorbau 29 (oder 29') und der Rahmen 35 ist an der zweiten Stirnfläche 5 des Kernaggregats 1 befestigt. Auch bei dieser Variante ist es in einfacher Weise möglich, feste Montagepunkte für die Befestigung Kernaggregat/Rahmen 35 vorzusehen, während die spezielle Ausgestaltung und Dimensionierung des Rahmens sowie die Art und Lage der Aufhängeeinrichtungen wiederum vom Fahrzeugtyp abhängt.

In den Figuren 5, 6 sind Stirnansichten des auf einem Fahrzeug montierten Kompaktklimagerätes dargestellt. Das Fahrzeug 41 gemäß Figur 5 weist zwei Fahrzeug-Luftkanäle 42, 43 auf, die sich in der Nähe der beiden oberen Dach-Außenkanten (parallel zur Fahrtrichtung des Fahrzeuges) befinden. Dementsprechend weist das Kompaktklimagerät den unter Figur 2 beschriebenen Vorbau 29 mit den beiden Luftanschlußstutzen 31, 32 in der Nähe der Enden des Querkanals auf.

Das Fahrzeug 41' gemäß Figur 6 weist lediglich einen Fahrzeug-Luftkanal 44 auf, der sich über die Breite des Fahrzeugdachs erstreckt. Dementsprechend weist das Kompaktklimagerät den unter Figur 3 beschriebenen Vorbau 29' mit einem sich über die Breite des Querkanals erstreckenden Luftanschlußstutzen 33 auf.

In Figur 7 ist eine Seitenansicht des auf einem Fahrzeug montierten Kompaktklimagerätes dargestellt. Es sind der Vorbau 17 des Kompaktklimagerätes mit Lufteinlaßgitter 18 und der Vorbau 29 mit Luftanschlußstutzen 31 zu erkennen. Die Aufhängeeinrichtungen 21, 22 dienen zur Montage des Kompaktklimagerätes auf dem Dach des Fahrzeuges 41.

In Figur 8 ist eine Stirnansicht eines alternativen Kompaktklimagerätes dargestellt. Es ist ein Fahrzeug 45 mit Fahrzeugrahmen 46, 47 längs den beiden Dach-Außenkanten zu erkennen, so daß eine Wanne 48 zwischen beiden Fahrzeugrahmen 46, 47 gebildet wird. Die Vorbauten 17, 23 sind entsprechend den Stufen des Wagendachs geformt und tragen die Aufhängeeinrichtungen 21, 27 zur Montage des Kompaktklimagerätes auf dem Wagendach. Durch die spezielle Formgebung der Vorbauten 17, 23 befindet sich das Kernaggregat 1 raumsparend innerhalb der Wanne 48, ohne daß konstruktive Änderungen am Kernaggregat vorzunehmen sind.

In den Figuren 5, 6, 7 und 8 ist angedeutet, daß die Formgebung der Vorbauten entsprechend an die Fahrzeugform bzw. das Fahrzeugdesign angepaßt werden kann.

In Figur 9 ist eine Sicht auf das Kompakt-Lüftungs/Luftheiz-Gerät bei entfernten Deckeln dargestellt. Dieses Kompakt-Lüftungs/Luftheiz-Gerät dient zur Beheizung des Fahrzeuges bei Winterbetrieb und zur Belüftung (jedoch nicht Klimatisierung) des Fahrzeuges bei Sommerbetrieb und ist preiswerter in der Anschaffung und kostengünstiger im Betrieb als das Kompaktklimagerät. Die Aufteilung des Kompakt-Lüftungs/Luftheiz-Gerätes in die vier Komponenten Kernaggregat 1' und drei Vorbauten 17, 23', 29 ist wie beim Kompaktklimagerät. Das Kernaggregat 1' enthält keine Bauteile eines Klimagerätes wie Verdampfer, Verflüssiger usw., sondern zwei Klimalüfter 11', 11'', wobei dem Klimalüfter 11' ein Heizaggregat 10' nachgesschaltet ist. Der Klimalüfter 11' saugt Frischluft über das Lufteinlaßgitter 18 und den Luftfilter 19 des ersten Vorbaus 17 an und bläst diese Luft - ggf. erwärmt durch das Heizaggregat 10' - in den Querkanal des Vorbaus 29. Der Klimalüfter 11'' saugt Frischluft über ein Lufteinlaßgitter 24' und ein Luftfilter 25 des zweiten Vorbaus 23' und bläst diese Luft ebenfalls in den Querkanal des Vorbaus 29. Beide Lufteinlaßgitter 18, 24' sind gleich ausgeführt. Das Verhältnis der im Sommerbetrieb und im Winterbetrieb erforderlichen Luftmenge beträgt beispielsweise 4 : 1. Bei Winterbetrieb läuft deshalb lediglich der Klimalüfter 11' mit reduzierter Drehzahl. Die angesaugte Luft wird mittels des Heizaggregates 10' erwärmt und in den Querkanal eingeblasen. Der Klimalüfter 11'' ist abgeschaltet und der Luftkanal vom Klimalüfeter 11'' zum Querkanal 29 wird mit Hilfe einer Klappe 29 abgesperrt, um einen Kaltlufteintritt in den Querkanal zu verhindern. Bei Sommerbetrieb laufen beide Klimalüfter 11', 11'' mit Nenndrehzahl und blasen gemeinsam in den Querkanal ein.

Das Kompakt-Lüftungs/Luftheiz-Gerät ist im übrigen wie vorstehend für das Kompaktklimagerät beschrieben ausgerüstet. Dies gilt insbesondere für die Luftanschlußstutzen 31/32/33 und die Aufhängeeinrichtungen 21/22/27/28 bzw. 36/37/38/39. Die Öffnung 16 für den Luftaustritt der durch einen Verflüssiger erhitzten Luft entfällt selbstverständlich.

Für die vorstehend beschriebenen Kompaktklimageräte und für das Kompakt-Lüftungs/Luftheiz-Gerät gilt allgemein, daß die Lufteinlaßgitter 18, 24, 24' entsprechend den am Wagendach des Fahrzeuges vorgesehenen Sichtblenden ausgebildet sind.

Dies gilt u. a. für die Höhe und die Ausführungsform der Sichtblenden, beispielweise das Gitterrippen-Profil. Hierdurch können die Sichtblenden am Einbauort des Kompaktklimagerätes bzw. des Kompakt-Lüftungs/Luftheiz-Gerätes entfallen und die angesaugte Luft kann ungehindert einströmen. Die Lufteinlaßgitter 18, 24, 24' sind vorzugsweise als bedarfsweise zu öffnende Klappen ausgebildet, um beispielsweise Wartungsarbeiten, wie Filterwechsel, zu erleichtern. Auch hierbei ist es von Vorteil, wenn vor dem Öffnen der Klappen, d.h. der Lufteinlaßgitter 18, 24, 24' nicht erst Sichtblenden demontiert werden müssen.

## Patentansprüche

1. Kompaktklimagerät für ein Fahrzeug zur Montage auf dem Wagendach, gekennzeichnet durch eine Aufteilung in vier Hauptkomponenten:
- ein selbsttragendes Kernaggregat (1) mit den Bauteilen eines Klimagerätes, wie Verdampfer (8), Verdichter, Verflüssiger (9), Expansionsventil, Klimalüfter (11) und Verflüssigerlüfter (12),
- ein an die erste Seitenfläche (2) des Kernaggregats (1) parallel zur Längsachse des Fahrzeuges montierbaren ersten Vorbau (17) mit Lufteinlaßgitter (18) und Luftfilter (19) zum Ansaugen der aufzubereitenden Luft,
- ein an die zweite Seitenfläche (3) des Kernaggregats (1) parallel zur Längsachse des Fahrzeuges montierbaren zweiten Vorbau (23) mit Lufteinlaßgitter (24) zum Ansaugen der Kühlluft für den Verflüssiger (9),
- ein an die erste Stirnfläche (4) des Kernaggregats (1) senkrecht zur Längsachse des Fahrzeuges montierbaren dritten Vorbau (29, 29') mit einem Querkanal und mindestens einem Luftanschlußstutzen (31, 32, 33) zur Einleitung der aufbereiteten Luft in das Fahrzeug (41, 41').

2. Kompakt-Lüftungs/Luftheiz-Gerät für ein Fahrzeug zur Montage auf dem Wagendach, gekennzeichnet durch eine Aufteilung in vier Hauptkomponenten:
- ein selbsttragendes Kernaggregat (1') mit den Bauteilen eines Lüftungs/Luftheiz-Gerätes, wie Klimalüfter (11',11'') und Heizaggregat (10'),
- ein an die erste Seitenfläche (2) des Kernaggregats (1') parallel zur Längsachse des Fahrzeuges montierbaren ersten Vorbau (17) mit Lufteinlaßgitter (18) und Luftfilter (19) zum Ansaugen der aufzubereitenden Luft,
- ein an die zweite Seitenfläche (3) des Kernaggregats (1') parallel zur Längsachse des Fahrzeuges montierbaren zweiten Vorbau (23') mit Lufteinlaßgitter (24') und Luftfilter (25) zum Ansaugen der aufzubereitenden Luft,
- ein an die erste Stirnfläche (4) des Kernaggregats (1') senkrecht zur Längsachse des Fahrzeuges montierbaren dritten Vorbau (29, 29') mit einem Querkanal und mindestens einem Luftanschlußstutzen (31, 32, 33) zur Einleitung der aufbereiteten Luft in das Fahrzeug (41, 41').

3. Gerät nach Anspruch 1 oder 2, dadurch gekennzeichnet, daß der dritte Vorbau (29) einen Luftanschlußstutzen (31, 32) an jedem Ende des Querkanals besitzt.

4. Gerät nach Anspruch 1 oder 2, dadurch gekennzeichnet, daß der dritte Vorbau (29') einen sich über die Breite des Querkanals erstreckenden Luftanschlußstutzen (33) besitzt.

5. Gerät nach einem der Ansprüche 1 bis 4, dadurch gekennzeichnet, daß erster und zweiter Vorbau (17, 23, 23') mit Aufhängeeinrichtungen (21, 22, 27, 28) zur Montage des Gerätes am Fahrzeug versehen sind.

6. Gerät nach einem der Ansprüche 1 bis 4, dadurch gekennzeichnet, daß dritter Vorbau (29, 29') und zweite Stirnfläche (5) des Kernaggregats (1) mit Aufhängeeinrichtungen (36 bis 39) zur Montage des Gerätes am Fahrzeug versehen sind.

## Claims

1. Compact air-conditioning unit for a vehicle, for mounting on the vehicle roof, characterized by a division into four main components:
- a self-supporting core module (1) with the components of an air-conditioning unit such as evaporator (8), compressor, condenser (9), expansion valve, air-conditioning fan (11) and condenser fan (12),
- a first add-on module (17), which can be mounted on the first side surface (2) of the core module (1), parallel to the longitudinal axis of the vehicle, and has an air-inlet grille (18) and air filter (19) for taking in the air which is to be conditioned,
- a second add-on module (23), which can be mounted on the second side surface (3) of the core module (1), parallel to the longitudinal axis of the vehicle, and has an air-inlet grille (24) for taking in the cooling air for the condenser (9),
- a third add-on module (29, 29'), which can be mounted on the first end surface (4) of the core module (1), perpendicularly with respect to the longitudinal axis of the vehicle, and has a transverse duct and at least one air-channelling connection stub (31, 32, 33) for directing the conditioned air into the vehicle (41, 41').

2. Compact ventilating/air-heating unit for a vehicle, for mounting on the vehicle roof, characterized by a division into four main components:
- a self-supporting core module (1') with the components of a ventilating/air-heating unit such as air-conditioning fan (11', 11'') and heating module (10'),
- a first add-on module (17), which can be mounted on the first side surface (2) of the core module (1'), parallel to the longitudinal axis of the vehicle, and has an air-inlet grille (18) and air filter (19) for taking in the air which is to be conditioned,
- a second add-on module (23'), which can be mounted on the second side surface (3) of the core module (1'), parallel to the longitudinal axis of the vehicle, and has an air-inlet grille (24') and air filter (25) for taking in the air which is to be conditioned,
- a third add-on module (29, 29'), which can be mounted on the first end surface (4) of the core module (1'), perpendicularly with respect to the longitudinal axis of the vehicle, and has a transverse duct and at least one air-channelling connection stub (31, 32, 33) for directing the conditioned air into the vehicle (41, 41').

3. Unit according to Claim 1 or 2, characterized in that the third add-on module (29) has an air-channelling connection stub (31, 32) at each end of the transverse duct.

4. Unit according to Claim 1 or 2, characterized in that the third add-on module (29') has an air-channelling connection stub (33) which extends over the width of the transverse duct.

5. Unit according to one of Claims 1 to 4, characterized in that the first and second add-on modules (17, 23, 23') are provided with attachment devices (21, 22, 27, 28) for mounting the unit on the vehicle.

6. Unit according to one of Claims 1 to 4, characterized in that the third add-on module (29, 29') and the second end surface (5) of the core module (1) are provided with attachment devices (36 to 39) for mounting the unit on the vehicle.

## Revendications

1. Appareil compact de climatisation pour un véhicule, pour montage sur le toit du véhicule, caractérisé par une subdivision en quatre modules principaux:
- un module central (1) autoportant avec les composants d'un appareil de climatisation tels que évaporateur (8), compresseur, condenseur (9), soupape de détente, ventilateur de climatisation (11) et ventilateur de condenseur (12),
- un premier module additionnel (17) susceptible d'être monté sur la première surface latérale (2) du module principal (1) parallèlement à l'axe longitudinal du véhicule, avec une grille d'admission d'air (18) et un filtre à air (19) pour l'aspiration de l'air à traiter,
- un deuxième module additionnel (23) susceptible d'être monté sur la deuxième surface latérale (3) du module central (1) parallèlement à l'axe longitudinal du véhicule, avec une grille d'admission d'air (24) pour l'aspiration de l'air de refroidissement pour le condenseur (9),
- un troisième module additionnel (29, 29') susceptible d'être monté sur la première surface frontale (4) du module central (1) perpendiculairement à l'axe longitudinal du véhicule, avec un canal transversal et au moins une tubulure de raccordement d'air (31, 32, 33) pour l'introduction de l'air traité dans le véhicule (41, 41').

2. Appareil compact d'aération/chauffage par air pour un véhicule, pour montage sur le toit du véhicule, caractérisé par une subdivision en quatre modules principaux:
- un module central (1') autoportant avec les composants d'un appareil d'aération/chauffage par air, tels que ventilateurs de climatisation (11', 11'') et groupe de chauffage (10'),
- un premier module additionnel (17) susceptible d'être monté sur la première surface latérale (2) du module central (1') parallèlement à l'axe longitudinal du véhicule, avec une grille d'admission d'air (18) et un filtre à air (19) pour l'aspiration de l'air à traiter,
- un deuxième module additionnel (23') susceptible d'être monté sur la deuxième surface latérale (3) du module central (1') parallèlement à l'axe longitudinal du véhicule, avec une grille d'admission d'air (24') et un filtre à air (25) pour l'aspiration de l'air à traiter,
- un troisième module additionnel (29, 29') susceptible d'être monté sur la première surface frontale (4) du module central (1') perpendiculairement à l'axe longitudinal du véhicule, avec un canal transversal et au moins une tubulure de raccordement d'air (31, 32, 33) pour l'introduction de l'air traité dans le véhicule (41, 41').

3. Appareil suivant la revendication 1 ou 2, caractérisé par le fait que le troisième module additionnel (29) comporte une tubulure de raccordement d'air (31, 32) à chaque extrémité du canal transversal.

4. Appareil suivant la revendication 1 ou 2, caractérisé par le fait que le troisième module additionnel (29') comporte une tubulure de raccordement d'air (33) s'étendant sur la largeur du canal transversal.

5. Appareil suivant l'une quelconque des revendications 1 à 4, caractérisé par le fait que le premier et le deuxième modules additionnels (17, 23, 23') comportent des dispositifs de suspension (21, 22, 27, 28) pour le montage de l'appareil sur le véhicule.

6. Appareil suivant l'une quelconque des revendications 1 à 4, caractérisé par le fait que le troisième module additionnel (29, 29') et la deuxième surface frontale (5) du module central (1) sont munis de dispositifs de suspension (36 à 39) pour le montage de l'appareil sur le véhicule.
